# EUROPÄISCHE PATENTSCHRIFT

(11) **EP 0 765 609 B1**
(45) Veröffentlichungstag und Bekanntmachung des Hinweises auf die Patenterteilung: **25.02.2004**
(21) Anmeldenummer: 96115664.3
(22) Anmeldetag: 30.09.1996
(51) Int. Cl.: A23L 2/62, A23L 1/0524, A23L 1/0526

(54) **Flüssige Lebensmittelzubereitung sowie Verfahren zu deren Herstellung**
Fluid food preparations and method for their production
Aliments liquides et methode pour leur production

(30) Priorität: 28.09.1995 DE 19536097
(43) Veröffentlichungstag der Anmeldung: 02.04.1997
(73) Patentinhaber: Eckes-Granini GmbH & Co. Kommanditgesellschaft, D-55268 Nieder-Olm (DE)
(72) Erfinder: Kolb, Erich, Dr., 55268 Nieder-Olm (DE); Nagel, Peter, Dr., 55545 Bad Kreuznach (DE); Simson, Ingrid, 55122 Mainz (DE); Dechent, Hans-Mario, 55291 Saulheim (DE)
(74) Vertreter: Luderschmidt, Schüler & Partner GbR

(56) Entgegenhaltungen:
- EP-A- 0 639 335
- DE-A- 2 828 582
- US-A- 4 478 855
- US-A- 5 409 725

## Beschreibung

Gegenstand der vorliegenden Erfindung sind trubstabile, lagerfähige flüssige Lebensmittelzubereitungen, insbesondere alkoholfreie Getränke, enthaltend Fruchtsaft und/oder Fruchtmark und/oder ganze oder teilweise zerkleinerte Fruchtstücke, Milchprodukte, Polysaccharide und Wasser sowie gegebenenfalls übliche Zusätze, sowie Verfahren zu deren Herstellung.

Alkoholfrei im Sinne der vorliegenden Erfindung sind Produkte, deren Alkoholgehalt 3,0 g/l nicht übersteigt und die damit bezüglich ihrer Alkoholfreiheit den Anforderungen entsprechen, die für Fruchtsäfte gefordert werden (Zipfel, Lebensmittelrecht, Neufassung der Leitsätze für Fruchtsäfte, München: Beck'sche Verlagebuchhandlung).

Mixgetränke, die durch Mischen von Fruchtsäften mit Milch hergestellt werden, sind schon lange bekannt. Diese, häufig im Haushalt durch intensives Mischen und starken Lufteinschlag hergestellten Getränke sind gekennzeichnet durch ihre schaumige Konsistenz und werden oft durch den Zusatz alkoholhaltiger Produkte geschmacklich verfeinert.

Auch in der Literatur werden alkoholfreie, aus Fruchtsäften und Milcherzeugnissen, wie Molka, entrahmter Sauermilch, Magermilch-Joghurt und Buttermilch hergestellte Getränke beschrieben (Benk: Alkoholfreie Getränke aus Fruchtsäften und Milcherzeugnissen, Der Mineralbrunnen, 5, 1986).

Lohmann beschreibt die Herstellung von Milchmischgetränken, wobei durch Einsatz von Pektin und rasche Absenkung des pH-Wertes unter den isolektrischen Punkt des Kassing eine Kaseinausfällung vermieden werden kann (Gordian 7 - 8, 1982, S. 148 - 153).

In den USA entwickelte, aus Milch und Orangensaft unter Verwendung von 0,2 % Carboxymethylcellulose hergestellte Erfrischungsgetränke werden ebenfalls beschrieben (E.J: Mann: Erfrischungsgetränke auf Milchbasis, Die Molkerei-Zeitung Welt der Milch, 27,1973, S. 983).

Die DE-OS 20 21 500 beschreibt ein Verfahren zur Herstellung und Haltbarmachung von Milch-Mischgetränken, bei dem Mischungen aus gesäuerter Milch oder Milcherzugnissen, Johannisbrotkernmehl, Stärke, Rübenzucker, organischen Säuren, geschmacksbeeinflussenden Zutaten, wie Fruchtsirup, Fruchtaroma, Farbstoffen, Coffein, Cola-Extrakten und/oder Alkohol hergestellt werden, des weiteren Dinatriumphosphat-Dihydrat zugesetzt wird, die Mischung anschließend erhitzt, dann rasch abgekühlt und danach homogenisiert wird.

Die DE-OS 25 35 904 beschreibt ein Verfahren zur Herstellung von alkohol-, kohlensäure- und konservierungsmittelfrein Erfrischungsgetränken, aus Bestandteilen der Kuhmilch, wie ca. 70 % Molke, Milcheiweiß,Milchsäure, Joghurt und Milchzucker unter Zugabe von Saft natürlicher Früchte, die bei +20°C eine Haltbarkeit und Lagerfähigkeit von mindestens 6 Wochen besitzen.

Die DE-OS 17 92 084 beschreibt ein Verfahren zur Herstelhung eines Sauermilchgetränkes aus gesäuerter Milch, Frucht- oder Gemüssäften, Cola oder anderen Aromastoffen unter Verwendung von Zucker und Pektin. Das Getränk wird vor der Abfullung einer Hochdruckhomogenisation bei Temporaturen von 51 bis 54,5°C und Drücken von 350 bis 380 atü unterzogen, anschließend in Flaschen abgefüllt und 20 bis 30 Minuten bei Temperaturen zwischen 60 und 65°C pasteurisiert.

Die JP 5738220 B2 bzw. GB 1 440 161 beschreiben ein Getränk mit einem pH-Wert von 3,6 bis 4,5, das 3 -5 Vol.-Teile Kuhmilch, 6,5 - 4,5 Teile Sirup und 0,5 Teile einer wässrigen Mischung aus 10-50 % Fruchtsaft, 4,2 -6 % Natriumcarboxymethylcellulose, 3,1 -5 % einer Hydroxycarbonsäure sowie Farbstoffe, Aromastoffe usw. enthält.

WO 9418853 beschreibt ein aus Milch, Frucht und/oder Fruchtsaft bestehendes Getränk. dem 0,1 -1 % eines oder mehrerer Stabilisatoren, wie Carrageon, Natriumphosphat und Natriumcitrat zugesetzt sind und das einen pH-Wert von 5,0 - 6,5 aufweist.

Die DE-OS 19 51 842 beschreit ein Verfahren zur Herstellung eines alkoholfreien Cremegetränkes, wobei einer Zucker-Stärke-Mischung Pektin und aromagebende Stoffe, zum Beispiel eine Frucht-Kondensmilch-Mischung und zur Haltbarmachung Sorbinsäure zugesetzt werden, dem auf 50 **°**C erwärmten Gemisch dann eine Vitaminlösung zugesetzt wird und allmählich auf 25°C rückgekühlt wird. Das Getränk soll insbesondere für Kinder, alte Menschen, Sportler und Diabetiker geeignet sein.

Aus der CH-PS 617 324 ist ein Verfahren zur Herstellung von haltbaren Frucht-Milch- bzw. Gemüse-Milchgstränken, die durch Mischen von Frucht- bzw. Gemüsepürees mit Sauermilch, z. B. Joghurt, Apfelpektin, Zucker und Zitronensäure erhalten und durch Hitzeeinwirwirkung haltbar gemacht werden, bekannt.

In der US-PS 4,212, 893 wird ein emulgiertes, stabiles, angesäuertes Vollmilchprodukt beschrieben, das zur Stabilisierung Johannisbrotkernmehl allein oder im Gemisch mit Pektin oder Agar und als säuernde Komponente Fruchtsaft und/oder organische Säuren enthält.

Die US-PS 4,413,017 beschreibt Nahrungsmittelkompositionen mit puddingähnlicher Konsistenz, die neben ca. 30 bis 55 % gewaschener Saftpulpe etwa 5 bis 15 % eines Sauermilchproduktes, 5 bis 15 % süßende Kohlenhydrate und Genußsäuren enthalten. Die Produkte können entweder gekühlt oder tiefgefroren angeboten werden. Sie können auch 5 bis 20% gewürfelte Früchte enthalten. Der pH-Wert beträgt 3,0 bis 3,5 und die Viskosität 7.000 bis 18.000 cps (bei 4,44°C +/- 0,7°C).

Die bisher aus dem Stand der Technik bekannten, unter Verwendung von Fruchtsäften, Fruchtbestandteilen und/oder Fruchtaromen durch Mischen mit Milchprodukten bzw. -erzeugnissen, gegebenenfalls unter Verwendung von Pektin, Johannisbrotkernmehl oder Carboxymethylcellulose hergestellten und durch Hitzeeinwirkung haltbar gemachten Produkte unterschiedlicher Konsistenz haben den Nachteil, daß sie bei längerer Lagerung bei Raumtemperaturen und den für fruchtsafthaltige Produkte typischen pH-Werten von < 4,5 keine zufriedenstellende Trub- bzw. Emulsionsstabilität aufweisen, so daß bereits nach wenigen Wochen oder Monaten z.B. Ausflockungen und Serumbildungen zu beobachten sind, die häufig dazu führen, daß sich der Trub zu einem festen Bodensatz zusammenballt und die überstehende Flüssigkeit völlig ausklart.

In der US-PS 5,409,725 wird ein Verfahren beschrieben, in sauren Getränken enthaltene Proteine über lange Zeit vor Gerinnung und/oder Ausfällung zu bewahren, indem die Proteine mit ebenfalls in dem Getränk enthaltenem Galactomannan vor dem Ansäuern zu einem Glycoprotein umgesetzt werden, welches im sauren Medium für lange Zeit stabil ist.

Die EP 0 639 335 beschreibt saure, Milchprodukte enthaltende, physikalisch und chemisch stabile Getränke aus einem Pflanzenextrakt, - saft- oder Aufguß. Das Getränk enthält Pektin, ein Polyolalginat, z.B. Propylenglycolalginat, sowie mindestens einen Fettsäureester aus der Gruppe Laurin-, Myristin-, Palmitin-, Capryl- oder Caprinsäure.

In der US-PS 4,478,855 wird ein lagerstabiles Fruchtsaftgetränk beschrieben, das zusammengesetzt ist aus 10-85% Citrussaft, einem 90-15 Gew.-% Anteil eines Milchrohprodukts, welches seinerseits 0,5 bis 10 Gew.-% Molkeproteine aufweist, sowie einem Anteil von 2,5-20% Süßungsmittel aus hydrolysierter Lactose (Glucose, Galactose) sowie ggf. einem Stabilisator. Als Stabilisator dienen bei hohem Proteingehalt und niedrigem Gehalt an hydrolysierter Lactose 0,05 bis 0,2% eines Galactose-Derivate und Galacturonsäure enthaltenden Polysaccharids, wie z.B. Pektin, Carrageen, Arabinogalactan, Agar-Agar.

Aufgabe der vorliegenden Erfindung ist es daher trub- bzw. emulsionsstabile alkoholfreie Getränke bereitzustellen, die z.B. eine Alternative zu alkoholhaltigen Frucht-Emulsions-Likören darstellen, wenn zwar auf den Genuß von Alkohol, nicht jedoch auf den hohen Genußwert eines Likörs verzichtet werden soll oder muß oder die als Alternative zu herkömmlichen alkoholfreien Getränken mit erfrischendem Charakter konsumiert werden können.

Erfindungsgemäß wurde überraschend gefunden, daß Getränke, die aus Mischungen von Fruchtsaft und/oder Fruchtmark mit Milchprodukten, z.B. Vollmilch, teil- oder vollentrahmter Milch, Joghurt, Magermilchjoghurt, Sahne, Sauermolke, Süßmolke, ggf. unter Verwendung von Süßungsmittein hergestellt sind, eine hohe Trub- bzw. Emulsionsstabilität aufweisen, wenn sie eine spezielle Polysaccharidkombination bestehend aus einem Gemisch aus Guarkernmehl und gegebenenfalls einem oder mehreren weiteren Polysaccharid(en) enthalten, unter der Maßgabe, daß mindestens zwei Polysaccharide enthalten sind, ausgenommen Gemische enthaltend Pektin und Johannisbrotkernmehl.

Überraschend wurde gefunden, daß die gute Trub- bzw. Emulsionsstabilität bei der Lagerung unter Normalbedingungen über einen Zeitraum von mindestens 12 Monaten und einen weiten Viskositätsbereich gegeben ist.

Als Guarkernmehl geeignet ist erfindungsgemäß das nach sauberer Isolierung des Endosperms aus dem Samen der Guarpflanze auf müllereitechnischem Wege erhaltene Mehl mit einem Teilchendurchmesser > 0,06 mm und einem Verhältnis kleinster zu größtem Korndurchmesser von maximal 1 : 3,4, vorzugsweise mit einem Teilchendurchmesser von 0,075 bis 0,085 mm und einem Verhältnis kleinster zu größtem Teilchendurchmesser von 1: 1,2 bis 1:1,4.

Neben Guarkernmehl enthalten die erfindungsgemäßen Getränke ein weiteres Polysaccharid oder zwei oder mehrere weitere Polysaccharide. Ausgenommen sind Gemische mit Pektin und Jo-hannisbrotkernmehl. Als Polysaccharide besonders geeignet sind erfindungs-gemäß solche, die in wässrigen Systemen Gele bzw. viskose Lösungen bilden (Hydrokolloide), wobei insbesondere Heteropolysaccharide bevorzugt sind. Beispiele für solche weiteren Polysaccharide sind Pektin, Tarakernmehl, Carrageen, Traganth, Gummi arabicum, Xanthan, Celluloseether, z.B. Carboxymethylcellulose, Agar-Agar und Alginate, z.B. Propylenglycolalginat. Eines dieser Polysaccharide oder ein Gemisch aus zwei oder mehreren dieser Poysaccharide kann neben Guarkernmehl erfindungsgemäß angewandt werden. Vorzugsweise werden erfindungsgemäß Gemische aus Guarkernmehl mit Pektin, besonders hochverestertem Pektin, oder ein Gemisch aus Guarkernmehl mit Xanthan oder ein Gemisch aus Guarkernmehl mit Pektin und Xanthan angewandt. Als Pektin geeignet sind die üblicherweise verwendeten Pektine, z.B. Citruspektine oder Apfelpektine, vorzugsweise geeignet sind Citruspektine mit einem Veresterungsgrad > 30%, vorzugsweise > 60%. Insbesondere bevorzugt werden Gemische aus Guarkernmehl und Xanthan.

Das Polysaccharidgemisch ist in den erfindungsgemäßen Getränken in einer Menge von 0,1 bis 20 g/l, vorzugsweise von 3 bis 9 g/l enthalten. Das Verhältnis von Guarkernmehl zu dem weiteren Polysaccharid bzw. den weiteren Polysacchariden beträgt in den erfindungsgemäßen Getränken 1:0,005 bis 1:10, vorzugsweise 1:0,05 bis 1:5. Bei Gemischen aus Guarkernmehl und Pektin beträgt das Verhältnis von Guarkernmehl zu Pektin 0, 1:1 bis 5:1, vorzugsweise 1:1 bis 2,5:1.

Als Süßungsmittel geeignet sind alle üblicherweise verwendeten Süßungsmittel, wie Zucker, Invertzuckersirup, Zuckeraustauschstoffe, wie Fructose, Sorbit, Palatinit und dergleichen oder Zuckerersatzstoffe, wie Saccharin, Cyclamat, Acesulfam K, Neochesperidin, Aspartam und dergleichen. Es sind jedoch auch Gemische dieser Süßungsmittel verwendbar. Unter den Zuckern werden vorzugsweise Mono- und Disaccharide verwendet. Besonders geeignet als Süßungsmittel sind Saccharose, Glucose, Fructose, Invertzucker und Zuckerersatzstoffe, wobei diese einzeln oder in Form von Mischungen aus zwei oder mehreren eingesetzt werden können. Die Süßungsmittel werden in den erfindungsgemäßen Getränken geeigneterweise in einer Menge von 25 bis 200 g/l, vorzugsweise in einer Menge von 40 bis 150 g/l eingesetzt. Erfindungsgemäße Getränke können auch ohne Zusatz von Süßungsmitteln hergestellt werden.

Erfindungsgemäß können zur Erzielung eines harmonischen Süße-Säureverhältnisses ebenfalls Fruchtsäuren und/oder Säureregulatoren verwendet werden. Als Fruchtsäuren können z.B. Citronensäure, Äpfelsäure, Milchsäure, vorzugsweise L-(+)-Milchsäure, als Säureregulatoren können gegebenenfalls basische Salze, z.B. Calciumcarbonat, Kaliumcitrat und dergleichen eingesetzt werden.

Zur Herstellung der erfindungsgemäßen Getränke können Fruchtsaft oder Fruchtmark, ganze Früchte, Fruchtstücke oder Gemische derselben angewandt werden. Als Früchte, aus denen der Fruchtsaft, das Fruchtmark und die Fruchtstücke gewonnen werden, sind z.B. Birnen, Pfirsiche, Aprikosen, Äpfel, Acerola, Orangen, Ananas, Bananen, Kirschen, Pflaumen, Mirabellen, Kiwis, Himbeeren, schwarze und rote Johannisbeeren, Erdbeeren, Aronia, Passionsfrüchte, Mangos, Guaven, Cherimoyas, Guanabanas, Lulos, Moras und dergleichen geeignet. Vorzugsweise geeignet sind aromaintensive Früchte, z.B. Fruchtsaft und/oder Fruchtmark von Mangos, Cherimoyas, Passionsfrüchten, Guananbanas, Lulos und Moras sowie Citrusfrüchte. Der Fruchtsaft und/oder das Fruchtmark können gegebenenfalls auch in konzentrierter Form eingesetzt werden. Der Fruchtsaft und/oder das Fruchtmark werden in den erfindungsgemäßen Getränken geeigneterweise in Mengen von 5-80 Gew.-%, vorzugsweise in Mengen von 10-50 Gew.-% angewandt.

Zur Verwendung als ganze Früchte oder in stückiger Form geeignet sind alle Fruchtarten, die während der Herstellung und Haltbarmachung der erfindungsemäßen Getränken ganz oder weitgehend ihre feste Konsistenz behalten, z.B. Aprikosen-, Pfirsich-, Ananas-, Kirsch-, Pflaumen-, Mirabellen-, Birnen-, Heidelbeer-, Sauerkirsch-, Joharnnisbeer- und Stachelbeerstücke. Geeigneterweise werden Fruchtwürfel von Aprikosen, Pfirsichen, Birnen und Ananas mit einer Kantenlänge von 4 bis 8 mm verwendet, vorzugsweise in Mengen von 10 bis 80 g/l und insbesondere von 20 bis 50 g/l. Die Verwendung ganzer Früchte, z.B. von Sauerkirschen, Heidelbeeren, schwarzer und/oder roter Johannisbeeren ist ebenfalls möglich.

Als Milchprodukte bzw. -erzeugnisse geeignet sind erfindungsgemäß Milchprodukte wie Vollmilch, teil- oder vollentrahmte Milch, frische und/oder haltbar gemachte Sahne, Joghurt, Magermilchjoghurt, Buttermilch, Süß- und/oder Sauermolke, Milchtrockenerzeugnisse, Kondensmilch, aus frischen Rahm oder frischer Butter gewonnenes Milchfett und Sojamilch. Zum teilweisen oder auch völligen Ersatz der Milchprodukte sind auch sogenannte Fettersatzprodukte geeignet. Unter Fettersatzprodukten werden Verbindungen verstanden, die durch chemische oder physikalische Bearbeitung aus Stärke und Cellulose, Zucker und Fettsäuren oder aus Eiweißmischungen hergestellt werden. Durch den Einsatz derartiger Produkte kann eine Verminderung des Fettgehaltes ohne merkliche sensorische Beeinträchtigung des Getränks erzielt werden. Vorzugsweise werden erfindungsgemäß frische Sahne, gegebenenfalls im Gemisch mit Milch, Vollmilch, teil- und/oder vollentrahmte Milch, Joghurt, Sauermolke, Süßmolke und/oder Milchtrockenerzeugnisse angewandt.

Diese Milchprodukte können erfingungsgemäß einzeln oder im Gemisch miteinander angewandt werden. Bei Verwendung konzentrierter Milchprodukte und von Milchtrockenerzeugnissen muß such die zu deren Rekonstitu-tion erforderliche Wassermenge angewandt werden. Die aus den Milchprodukten stammenden tierischen Fette können auch ganz oder teilweise durch pflanzliche Produkte, z.B. durch Sojamilch ersetzt werden. Die erfindungsgemäßen Getränke könnan auch Eiprodukte sowie cholesterinfreie und/oder cholesterinarme Eiprodukte enthalten. Die Milchprodukte und die Ersatzstoffe der Milchprodukte sind in den erfindungsgemäßen Getränken geeigneterweise in Mengen von 2-20 Gew.-%, vorzugsweise in Mengen von 5-15 Gew.-%, enthalten, wobei sich im Falle von konzentrierten Milchprodukten und Milchtrockenerzeugnissen diese Mengenangaben auf die rekonstituierten Produkte beziehen.

Die erfindungsgemäßen Getränke enthalten vorzugsweise auch Aromastoffe, die der geschmacklichen Abrundung dienen. Als Aromastoffe können natürliche, naturidentische und/oder künstliche Aromastoffe eingesetzt werden. Beispiele sind Citrusaromen, Aromen von Beerenfrüchten, Pflanzen- und Kräuterextrakte, Kaffee -und Kakaoextrakte, Extrakte von grünem und schwarzem Tee, Gewürze und Gewürzauszüge, Aromen von Nüssen, Kaffee, Schokolade und dergleichen. Die in den erfindungsgemäßen Getränken geeigneterweise angewandten Mengen der Aromastoffe hängen von der Art und dem Konzentrationsgrad des jeweiligen Aromastoffes ab. Sie können geeigneterweise im Bereich von 0,01 bis 10 **%** liegen.

Die erfindungsgemäßen Getränke können gegebenenfalls weitere übliche Zusätze enthalten. Zu diesen gehören zum Beispiel Vitamine, wie die Vitamime der B-Gruppe, antioxidativ wirksame Vitamine, wie die Vitamine, E, C und Provitamin A, Mengen**-** und Spurenelemente wie Calcium, Magnesium, Kalium, Eisen, Zink, Selen und dergleichen.

Der Fettgehalt der erfindungsgemäßen Getränke beträgt höchstens 150 g pro Liter, vorzugsweise 2 bis 35 g pro Liter. Die erfindungsgemäßen Getränke können jedoch auch ohne Zusatz von Milch- oder pflanzlichem Fett hergestellt sein. Der Fruchtgehalt beträgt mindestens 5 Gew.-%, der Gesamtextraktgehalt mindestens 10 g/l, vorzugsweise mindestens 100 g/l und der Alkoholgehalt < 3 g/l. Unter dem Gesamtextraktgehalt eines erfindungsgemäßen Getränkes wird die Summe aller im Getränk enthaltenen, nicht flüchtigen Stoffe verstanden; neben dem Gehalt an Süßungsmittel wird er indirekt über eine Bestimmung der Dichte mit Hilfe eines Pyknometers oder Biegeschwingers ermittelt.

Die erfindungsgemäßen Getränke weisen einen pH-Wert von 3 bis 5,5, vorzugsweise von 3,2 bis 4,9 und insbesondere von 3,5 bis 4,5 sowie eine Viskosität > 5 mPas, vorzugsweise im Bereich von 8 bis 500 mPas und insbesondere im Bereich von 50 bis 500 mPas auf, wobei die Messung der Viskosität mit Hilfe eines Brookfield-Viskosimeters durchgeführt wird.

Die Herstellung der erfindungsgemäßen Getränke erfolgt derart, daß aus dem Polysaccharidgemisch und Wasser sowie ggf. einem Teil oder der Gesamtmenge des Süßungsmittels vorzugsweise eine Vormischung hergestellt wird, wobei die Auflösung des Polysaccharidgemisches in Wasser sowohl bei höheren Temperaturen, z.B. 60-80°C, als auch bei niedrigeren Temperaturen vorgenommen werden kann. Dieser so hergestellten Vorminchung wird dann unter Rühren, ggf. nach vorheriger Abkühlung auf niedrigere Temperaturen, ggf. das Süßungsmittell bzw. die Restmenge des Süßungsmittels und das Milchprodukt zugesetzt. Die erhaltene Mischung wird dam mit Fruchtsaft und/oder Fruchtmark sowie ggf. weiterem Wasser versetzt und anschließend homogenisiert. Danach können ggf. noch ganze Früchte und/oder Fruchtstücke sowie ggf. weitere Aromastoffe zugesetzt werden. Die erhaltene Mischung wird anschließend durch Erhitzen haltbar gemacht.

Erfindungsgemäß kann die Herstellung auch derart erfolgen, daß Fruchtsaft und/oder Fruchtmark, Wasser, das Polysaccharidgemisch und das Milchprodukt, ggf. Süßungsmittel und weitere Zutaten direkt, ohne Herstellung einer Vormischung miteinander vermischt werden und dann weiter wie beschrieben verfahren wird.

Die Homogenisierung und das Haltbarmachen durch Erhitzen erfolgen in üblicher Weise, wobei die Homogenisierung bei geeignetem Druck und ggf. auch in zwei Stufen durchgeführt wird. Der Druck kann vorzugsweise im Bereich von 100-250 bar liegen; es ist jedoch auch möglich, die Homogenisierung bei Drücken unter 100 bar bzw. über 250 bar durchzuführen. Die Homogenisation kann auch mittels Ultraschall, d.h. durch Erzeugen stark gebündelter Ultraschallenergie durchgeführt werden. Dabei werden hochfrequente Druckunterschiede in der Flüssigkeit erzeugt. In der Unterdruckphase sinkt der statische Druck unter den Dampfdruck der Flüssigkeit und es bilden sich kleine Flüssigkeitsdampfblasen, die bei wechselnder Druckbedingung wieder implosionsartig (mit annähernder Schallgeschwindigkeit) zusammenbrechen, wobei im zusammenstürzenden Hohlraum sehr hohe Drücke entstehen. Die Größe der auftretenden Kavitationsblasen ist abbängig von der Frequenz des Ultraschallfeldes. Die Haltbarmachung kann vorzugsweise durch Kurzzeiterhitzen auf eine Temperatur von 90-95°C erfolgen. Es ist jedoch auch möglich, die Haltbarmachung bei höheren Temperaturen, z.B. 121-125°C vorzumehmen.

Wesentlich ist, daß erfindungsgemäß während des Herstellungsverfahrens die vorstehend jeweils angegebene Reihenfolge der Zugabe der einzelnen Komponenten eingehalten wird.

Vorzugsweise wird das Herstellungsverfahren so durchgeführt, daß man eine Mischung aus den Polysacchariden und ggf. Süßungsmittel in warmem Wasser, zum Beispiel Wasser einer Temperatur von 70 bis 80°C löst, die Lösung abkühlt, beispielsweise auf eine Temperatur von 35 bis 40°C, und unter Rühren ggf. mit Süßungsmittell und dem zu verwendenden Milchprodukt versetzt, wobei eine Abkühlung, zum Beispiel auf 20°C, erfolgt, die erhaltene Mischung mit Fruchtsaft und/oder Fruchtmark, gegebenenfalls Wasser und weiteren Zutaten versetzt, homogenisiert, gegebenenfalls anschließend mit ganzen Früchten und/oder Fruchtstücken vesetzt und die so erhaltene Mischung durch Erhitzen haltbar macht. Falls der Sauerstoffgehalt von 1 mg/l überschritten wird, soll vorzugsweise vor der Homogenisierung eine Entlüftung vorgenommen werden, um Beeinträchtigungen der sensorischen und der Trub- bzw. Emulsionsstabilität, insbesondere Entmischungen und Serumbildung während der Haltbarmachung und der Lagerung zu vermeiden. Die Homogenisierung kann bei einem Druck von etwa 150 bis 250 bar und auch gegebenenfalls in zwei Stufen durchgeführt. Das Haltbarmachen durch Erhitzen kann durch Kurzzeiterhitzung, zum Beispiel auf eine Temperatur von 90-95°C bei einer Haltezeit von zum Beispiel 30 Sekunden erfolgen. Wird das Getränk zum Beispiel auf 121-125°C erhitzt, kann nach der Hitzesterilisation ein Rückkühlen auf eine niedrigere Temperatur, zum Beispiel auf 90°C, erfolgen, worauf das erhaltene Getränk in Behälter geeigneter Größe abgefüllt und auf ca. 20°C zurückgekühlt wird.

Erfindungsgemäß kann auch eine Kaltsterilfüllung vorgenommen werden, wobei das Getränk nach der Kurzzeiterhitzung z.B. auf Temperaturen von ca. 20°C abgekühlt und in sterile Behälter geeigneter Größe abgefüllt wird.

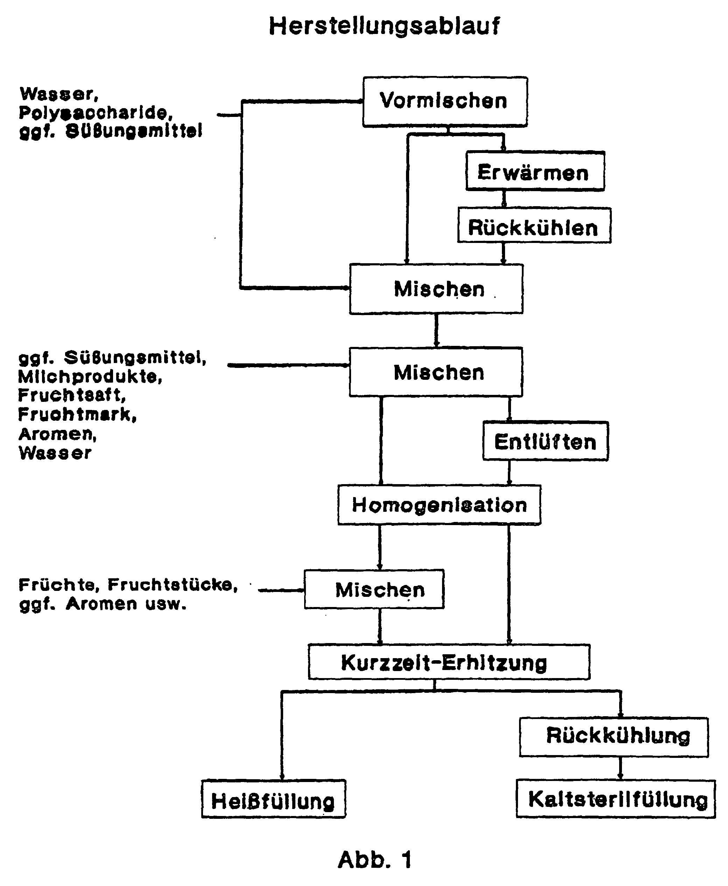

Der Herstellungsablauf ist in der Abbildung 1 schematisch dargestellt.

Die so hergestellten erfindungsgemäßen Getränke können ohne Qualitätsverlust, insbesondere ohne signifikante Beeinträchtigung der Trub- bzw. Emulsionsstabilität, mindestens 12 Monate bei Raumtemperatur (ca. 20°C) gelagert werden.

Die erfindungsgemäßen alkoholfreien flüssigen Zubereitungen können in verschiedener Weise und zu verschiedenen Anlässen konsumiert werden, z.B. in direkter oder in gekühlter Form wie handelsübliche alkoholische Frucht-Emulsionsliköre, als Getränke mit erfrischendem Charakter oder sie können ebenso ausgezeichnet zur Verfeinerung von Süßspeisen, Eis, Kuchen und dergleichen eingesetzt werden.

Die nachstehenden Beispiele dienen der weiteren Erläuterung der Erfindung. Bei allen nachfolgend beschriebenen Beispielen wurde zur Herstellung der Getränke jeweils entmineralisiertes Wasser eingesetzt, dessen Leitfähigkeit ca. 25 µS/cm betrug und das einen Restsauerstoffgehalt von maximal 0,2 mg/l nicht überschritt.

### Beispiel 1

Zur Herstellung von 25 Litern eines alkoholfreien Birnen-Emulsionsgetränks wurden 75 g eines Guarkernmehls mit einem Teilchendurchmesser < 0,085 mm und einem Verhältnis kleinster zu größtern Korndurchmesser von 1:1,2 mit 50 g Citruspektin mit einem Veresterungsgrad von 82 % sowie 1.250 g Zucker vermischt und im Anschluß in 8.000 l Wasser von 70-80°C gelöst. Der mittels Plattenwärmeaustauscher auf ca. 35-40°C zurückgekühlten Mischung wurden unter ständigem Rühren nacheinander 2.705 g Invertzukkersirup mit einer Trockensubstanz von 72,7 Gew.-% und einem Inversionsgrad von 0,67, 2.500 ml Sahne mit einem Fettgehalt von mindestens 30 Gew.-% zugesetzt. Die Mischung kühlte sich dabei auf ca. 20°C ab.

Im Anschluß wurden 8.250 g Williams Christ Birnenmark, 58,0 g Zitronensaftkonzentrat, 3.871 ml entmineralisiertes Wasser (mit einer elektrischen Leitfähigkeit von 25 µS und einem Restsauerstoffgehalt < 0,2 mg/l und 140 ml einer Mischung aus Vanille-, Kakao- und Birnenaroma zugefügt und die Gesamtmischung mittels eines Hochdruckkolbenhomogenisators und einem Druck von 200 bar homogenisiert. Danach wurde das Getränk in einem Plattenwärmeaustauscher auf 121-123°C erhitzt, nach einer Heißhaltezeit von 30 Sekunden auf 90°C zurückgekühlt, in 0,5 l Flaschen abgefüllt und im Anschluß auf 20°C zurückgekühlt.

Das so erhaltene Getränk hatte die typische Konsistenz wie sie von handelsüblichen Frucht-Emulsions-Likören bekannt ist und wies einen harmonisch abgerundeten Geschmack und eine ausgewogene Süße auf. Überraschenderweise ist das Getränk in seiner Vollmundigkeit handelsüblichen Frucht-Emulsionslikören vergleichbar. Das Getränk wies folgende Zusammensetzung auf:

| | |
|---|---|
| Gesamtextraktgehalt | 200 g/l |
| Alkoholgehalt | 1,2 g/l |
| pH-Wert | 4,2 |
| Gesamtsäure ber. als Citronensäure | 2,22 g/l |
| Fruchtgehalt | 35 Gew-% |
| Fettgehalt | 32 g/l |
| Eiweißgehalt | 3,0 g/l |
| Viskosität (20°C) | 280 mPas |

Ein handelsüblicher Frucht-Emulsionslikör mit einem Alkoholgehalt von 17 % vol bzw. 143 g/l hat zum Beispiel folgende Zusammensetzung:

| | |
|---|---|
| Gesamtextraktgehalt | 233 g/l |
| Alkoholgehalt | 143 g/l |
| pH-Wert | 4,2 |
| Gesamtsäure ber. als Citronensäure | 3,23 g/l |
| Fruchtgehalt | 25 Gew.-% |
| Fettgehalt | 35 g/l |
| Eiweißgehalt | 7 g/l |
| Viskosität (20°C) | 300 mPas |

Unter dem angegebenen "Gesamtsäuregehalt" wird die Summe der freien anorganischen und organischen Säuren erfaßt, die in Fruchtsäften und den daraus bereiteten Getränken in der Regel überwiegend aus Citronensäure, Äpfelsäure und Weinsäure bestehen. Die Bestimmung der Gesamtsäuren erfolgt durch Titration mittels 0,1 n-Natronlauge auf pH 8,1, wobei der Titrationsendpunkt potentiometrisch oder bei Fehlen eines geeigneten Meßgerätes unter Zusatz von Phenolphthalein ermittelt wird. Der Gesamtsäuregehalt wurde vorstehend als g/l Citronensäure berechnet.
Das Getränk war sowohl hinsichtlich Geruch und Geschmack als auch bezüglich seiner Emulsionsstabilität überraschend stabil. Nach 9-monatiger Lagerung bei 20°C wurden keinerlei Ausflockungen beobachtet und erst nach 13-monatiger Lagerung wurde eine schwach ausgeprägte Serumbildung festgestellt.

### Beispiel 2

Zur Herstellung von 25 l eines alkoholfreien Birnen-Emulsionsgetränks mit Birnenstückchen wurde das Produkt, wie es in Beispiel 1 beschrieben wurde, ausgemischt. Nach der Homogenisierung wurden 750 g Birnenstückchen mit einer Kantenlänge von ca. 6 x 4 x 4 mm zugesetzt. Das Erhitzen und Abfüllen erfolgte wie in Beispiel 1 beschrieben. Die Pasteurisation wurde mittels eines Röhrenwärmeaustauschers vorgenommen, um ein Verstopfen durch die stückigen Bestandteile zu verhindern.

Das Lagerverhalten war ähnlich wie bei Beispiel 1 beschrieben. Stückige Bestandteile, die sich im Verlauf der Lagerung teilweise am Boden des Behälter abgesetzt hatten, konnten durch kurzes Umschütteln vor Gebrauch wieder gleichmäßig im Getränk verteilt werden.

### Beispiel 3

Zur Herstellung von 40 l eines alkoholfreien Orangen-Kaffee- "Likörs" wurden 3.652 g Orangensaftkonzentrat, 2.000 g Zucker, 3.944 g Invertzuckersirup, 2.000 ml Sahne, 2.000 ml fettarme Milch, 100 g Guarkernmehl mit einem Teilchendurchmesser von < 0,10 mm und einem Verhältnis kleinster zu größtern Korndurchmesser von 1:1,4, 10 g Xanthan, 200 ml Kaffee-Extrakt und 70 ml einer Orangen-Aromamischung mit 29.120 ml entmineralisiertem Wasser verwendet. Herstellung, Abfüllung und Haltbarmachung erfolgten wie in Abbildung 1 dargestellt.

Das Produkt hatte ebenfalls ein ausgewogenes Süße-Säure-Verhältnis und wies einen vollmundigen, fruchtig-aromatischen und harmonischen Geschmack auf und konnte über einen Zeitraum von 12 Monaten ohne spürbaren Qualitätsverlust gelagert werden. Das Getränk hatte folgende Zusammensetzung:

| | |
|---|---|
| Gesamtextraktgehalt | 210 g/l |
| Alkoholgehalt | 0,6 g/l |
| pH-Wert | 4,09 |
| Gesamtsäure ber. als Citronensäure | 3,8 g/l |
| Fruchtgehalt | 50 Gew.-% |
| Fettgehalt | 16 g/l |
| Eiweißgehalt | 3,0 g/l |
| Viskosität | 130 mPas |

### Beispiel 4

Zur Herstellung eines weiteren Orangen-Kaffee-Getränks wurde wie in Beispiel 3 beschrieben verfahren, wobei anstelle von Sahne und fettarmer Milch ausschließlich Magermilch mit einem Fettgehalt von 0,3 % verwendet wurde. Das danach erhaltene Produkt zeigte im Vergleich zu dem in Beispiel 3 beschriebenen Produkt kein unterschiedliches Stabilitätsverhalten.

### Beispiel 5

In einem weiteren Versuch wurde ein Getränk gemäß Beispiel 4 hergestellt, wobei durch Erhöhung der Anteile an Wasser, Invertzuckersirup, Kaffee-Extrakt und Orangenaroma sowie durch Zugabe von Sauermolke und Zitronensaftkonzentrat ein Produkt erhalten wurde, das einen Gesamtextraktgehalt von 115 g/l, einen Fruchtgehalt von 5,5 %, einen Gehalt an Milchprodukten von 13,5 %, einen pH-wert von 3,6 -3,7 und eine Viskosität von 16 mPas aufwies. Das Getränk hatte einen erfrischend-fruchtigen Geruch und Geschmack und eine milchig-gelbliche, stabile Trübung. Der erfrischende Charakter wurde durch Zusatz von Kohlensäure, z.B. in Höhe von 1-2,5 g/l, noch verstärkt.

### Beispiel 6

Aus einer Mischung von Wasser, 0,27 % Citruspektin mit einem Veresterungsgrad von 72 %, 0,05 % Guarmehl, 0,005 % Xanthan, 9 % Glucosesirup, 10 % Magermilch, 5 % Zitronensaft und 0,025 % Zitronenaroma wurde ein weiteres erfindungsgemäßes Getränk hergestellt. Die Herstellung erfolgte gemäß dem in Abb. 1 dargestellten Schema, wobei die Homogenisation mittels Ultraschall vorgenommen wurde und die Haltbarmachung durch Erhitzen auf 85-88°C erfolgte. Nach 15-20 sec. Heißhaltezeit wurde das Getränk auf ca. 3-5°C abgekühlt, mit ca. 2-3 g/l Kohlendioxid versetzt und in Flaschen abgefüllt. Das Getränk wies eine milchig-weiße stabile Trübung, einen pH-Wert von 3,8 und eine Viskosität von 8 mPas auf.

### Beispiel 7

Aus einer Mischung von Wasser, 0,298 % Citruspektin mit einem Veresterungsgrad von ca. 38 %, 0,022 % Guarkernmehl mit einem Teilchendurchmesser < 0,10 mm, 19,75 % Magermilch, 17,7 Fruchtsaftkonzentrat (bestehend aus einer Mischung von Orangensaft- und Limettensaftkonzentrat) und 0,33 % einer Citrusaromenmischung wurden 10 l eines weiteren Getränkes hergestellt. Dazu wurden Wasser, die beiden Polysaccharide, die Magermilch, die beiden Fruchtsaftkonzentrate und die Aromenmischung unter intensivern Rühren gemischt und eine Stunde bei langsam laufendern Rührwerk gerührt, um die vollständige Quellung der Polysaccharide zu gewährleisten. Nach Entlüftung wurde die Gesamtmischung bei einer Temperatur von 60°C und einem Druck von 200 bar mittels eines Hochdruckkolbenhomogenisators homogenisiert und im Plattenwärmeaustauscher auf 85-87°C erhitzt, nach einer Heißhaltezeit von ca. 30 Sekunden in Flaschen abgefüllt und im Anschluß auf ca. 20°C zurückgekühlt.

Das so erhaltene Getränk wies einen Gesamtextraktgehalt von 98 g/l, einem pH-Wert von 4,0, eine Viskosität von 8,5 mPas und ebenso wie das in Beispiel 5 beschriebene Getränk einen erfrischend-fruchtigen Geschmack und eine stabile milchig-gelbliche Trübung auf.

### Beispiel 8

Zur Herstellung von 10 l eines alkoholfreien Ananas-Kokos-Getränks wurden 25 g Guarkernmahl, wie es in Beispiel 3 verwendet wurde, 50 g Gumml arabicum, 10 g Johannisbrotkernmehl, 4,2 g Calciumcarbonat, 400 g Fructose, 0,3 g Saccharinnatrium und 3 g Natriumcyclamat vermischt und in 4.000 ml Wasser von 60°C unter ständigem Rühren gelöst. Dieser Mischung wurden im Anschluß 1.500 ml Kondensmilch (Fettgehalt 10%) und danach 1.110 g Ananassaftkonzentrat, 58 ml einer Mischung aus Ananas- und Kokosaroma sowie die verbliebene Restmenge Wasser zugesetzt. Auf die Einhaltung dieser Reihenfolge war unbedingt zu achten. Es war ebenso unbedingt darauf zu achten, daß die Zugabe des Ananassaftkonzentrates erst dann erfolgte, wenn eine vollständige homogene Mischung der übrigen Komponenten vorlag.

Die auf ca. 40°C abgekühlte Mischung wurde im Röhrenwärmeaustauscher auf 55-60°C erhizt und im Anschluß homogenisiert, wobei die Homogenisation zweistufig erfolgte. Dabei wurde die erste Stufe mit einem Druck von 250 bar und die zweite Stufe mit einem Druck von 25 bar gefahren. Danach wurde das Getränk im Röhrenwärmeaustauscher auf 110-115°C erhitzt, auf 15-20°C zurückgekühlt und kaltsteril in 0,2 l Kartonverpackungen abgefüllt.

Das Getränk, das einen fruchtig-aromatischen Geschmack nach Ananas und Kokos aufwies und in seinem Geschmacksprofil an einen sogenannten Pina-Colada-Likör erinnerte, hatte folgende Zusammensetzung:

| | |
|---|---|
| Gesamtextrakt | 150,5 g/l |
| Alkoholgehalt | 1,9 g/l |
| pH-Wert | 3,8 |
| Gesamtsäure ber. als Citronensäure | 2,0 g/l |
| Fruchtgehalt | 45 Gew.-% |
| Fettgehalt | 15,3 g/l |
| Eiweißgehalt | 13,1 g/l |
| Viskosität (20°C) | 185 mPas |

### Beispiel 9

zur Herstellung von 10 leines weiteren erfindungsgemäßen Getränkes wurden 970 ml einer Mischung aus Sauermolke und Magermilchjoghurt, 978 g Zucker, 567 g Fruchtsaftkonzentrat bestehend aus einer Mischung von Orangensaft-, Zitronensaft-, Ananassaft- und Pfirsichsaftkonzentrat, 10,5 ml einer Orangen-Zitronen-Ananas-Pfirsich-Aromamischung, 14,7 g grünen Tee-Extrakt, 2,3 g Citruspektin mit einem Veresterungsgrad von 45%, 0,9 g Guarkernmehl, 0,1 g Xanthan sowie entmineralisiertes Wasser verwendet.

Die Polysaccharide wurden trocken mit dem Zucker vermischt und unter intensivern. Rühren in kaltern Wasser gelöst. Danach wurden Sauermolke und Joghurt und nach deren homogener Verteilung die Fruchtsaftkonzentrate und der Tee-Extrakt zugefügt. Die Mischung wurde anschließend bei langsam Isufendem Rührwerk 60 min gerührt und nach Zugabe der Aromenmischung mit 250 bar homogenisiert, im Plattenwärmeaustauscher auf 85°C erhitzt, nach einer Heißhaltezeit von 15 sec. heiß in Flashen abgefüllt und auf ca. 20°C zurückgekühlt.

Das erhaltene Getränk war von erfrischendem Geschmack und wies einen Fruchtgehalt von 20,8 Gew.-% (bezogen auf einfach konzentrierten Saft), einen Gehalt an Milchprodukten von 9,3 Gew.-%, einen Gesamtextraktgehalt von 115 g/l, einen Gesamtsäuregehalt (ber. als Citronensäure) von 4,8 g/l, eine pH-Wert von 3,6 und eine Viskosität 14 mPas auf. Die milchiggelbliche Trübung blieb auch im Verlauf der Lagerung überraschend stabil.

### Beispiel 10

In einem weiteren Versuch wurde das gemäß Beispiel 11 erhaltene Getränk nach der Erhitzung im Plattenwärmeaustauscher auf 4-5°C zurückgekühlt, durch kontinuierliche Zugabe mit 2,5 g/l Kohlendioxid versetz und in Flaschen abgefüllt. Überraschenderweise wies das Getränk im Vergleich zu dem nicht kohlendioxidhaltigen Produkt kein unterschiedliches Stabilitätsverhalten auf.

### Beispiel 11

Zur Herstellung von 10 l eines alkoholfreien Kirsch-Emulsionsgetränks wurden 20 g Guarkernmehl, 5 g Xanthan, 10 g Johannisbrotkernmehl, 500 g Zucker, 1.400 Invertzuckersirup, 3.300 g einer Mischung aus Sauerkirschsaft und Sauerkirschmark, je 400 ml Vollmilch und 400 ml Sahne mit einem Fettgehaht von 3,5 bzw. 31%, 37,8 ml einer Mischung aus Vanille-, Kakao- und Bittermandelaroma sowie entmineralisiertes Wasser verwendet. Die Herstellung und die Heißabfüllung erfolgten gemäß dem in Abbildung 1 dargestellten Schema. Das erhaltene Produkt war emulsionsstabil und in seinem Aussehen, seiner Konsistenz und Vollmundigkeit mit handelsüblichen Frucht-Emulsions-Likören vergleichbar.

## Patentansprüche

1. Frucht-Emulsionsgetränk mit
einem Fettgehalt kleiner gleich 150 g/l,
einem Alkoholgehalt kleiner 3 g/l,
einem pH-Wert von 3 bis 5,5,
enthaltend
Fruchtsaft und/oder Fruchtmark und/oder ganze oder zerkleinerte Fruchtstücke,
2-20 Gew.-% Milchprodukte und/oder Fettersatzprodukte bezogen auf das Gesamtgewicht des Frucht-Emulsionsgetränks,
eine Polysaccharidmischung umfassend mindestens zwei Polysaccharide,
Wasser
sowie gegebenenfalls übliche Zusätze,
**dadurch gekennzeichnet, daß**
die Polysaccharidmischung Guarkernmehl enthält,
wobei Polysaccharidmischungen enthaltend Pektin und Johannisbrotkernmehl ausgenommen sind und
wobei das Frucht-Emulsionsgetränk die Polysaccharidmischung in einer Menge von 3-9 g/l enthält.

2. Frucht-Emulsionsgetränk nach Patentanspruch 1, **dadurch gekennzeichnet, daß** die Polysaccharidmischung Citruspektin mit einem Veresterungsgrad größer 30 %, vorzugsweise größer 60 % enthält.

3. Frucht-Emulsionsgetränk nach Patentanspruch 1 und/oder 2, **dadurch gekennzeichnet, daß** die Polysaccharidmischung Guarkernmehl und Xanthan enthält.

4. Frucht-Emulsionsgetränk nach einem oder mehreren der Patentansprüche 1 bis 3, **dadurch gekennzeichnet, daß** die Polysaccharidmischung Guarkernmehl mit einem Teilchendurchmesser von größer 0,06 mm, vorzugsweise von 0,075-0,085 mm, und einem Verhältnis von kleinstem zu größtem Korndurchmesser von bis zu 1 :3,4, vorzugsweise von 1:1,2 -1:1,4, enthält.

5. Frucht-Emulsionsgetränk nach einem oder mehreren der Patentansprüche 1 bis 4, **dadurch gekennzeichnet, daß** die Polysaccharidmischung Carrageen, Traganth, Gummi arabicum, Agar-Agar, Alginate und/oder Celluloseether enthält.

6. Frucht-Emulsionsgetränk nach einem oder mehreren der Patentansprüche 1 bis 5, **dadurch gekennzeichnet. daß** die Polysaccharidmischung Pektin enthält, wobei das Verhältnis von Pektin zu dem bzw. den weiteren Polysacchariden 1:0,1-1:10, vorzugsweise 1:0,25-1:3, beträgt.

7. Frucht-Emulsionsgetränk nach einem oder mehreren der Patentansprüche 1 bis 6, **dadurch gekennzeichnet, daß** das Verhältnis von Guarkernmehl zu dem bzw. den weiteren Polysacchariden 1:0,005-1:10, vorzugsweise 1:0,05-1:5 beträgt.

8. Frucht-Emulsionsgetränk nach einem oder mehreren der Patentansprüche 1 bis 7, **dadurch gekennzeichnet, daß** es eine Viskosität > 5 mPas bei 20°C, vorzugsweise eine Viskosität im Bereich von 8 bis 500 mPas bei 20°C, aufweist.

9. Verfahren zur Herstellung des Frucht-Emulsionsgetränkes nach einem oder mehreren der Patentansprüche 1 bis 8, **dadurch gekennzeichnet, daß** man aus der Polysaccharidmischung und Wasser und gegebenenfalls einem Teil oder der Gesamtmenge des Süßungsmittels vorzugsweise eine Vormischung herstellt, dieser Vormischung unter Rühren die Restmenge der Süßungsmittel und das Milchprodukt zusetzt, die erhaltene Mischung mit Fruchtsaft und/oder Fruchtmark und Aromastoffen versetzt, diese Mischung gegebenenfalls entlüftet, homogenisiert, anschließend gegebenenfalls ganze Früchte und/oder Fruchtstücke zusetzt und das danach erhaltene Produkt durch Erhitzen haltbar macht.

## Claims

1. Fruit emulsion drink with
a fat content of equal to or less than 150 g/l,
an alcohol content of less than 3 g / l,
a pH-value of 3 to 5.5,
containing
fruit-juice and / or fruit pulp and / or whole or comminuted fruit sections,
2 - 20 % by weight of milk-products and / or fat-substitute products with respect to the total weight of the fruit emulsion drink,
a polysaccharide mixture containing at least two polysaccharides,
water
together with customary additives, if required
**characterised in that**
the polysaccharide mixture contains guar-kernel meal
whereby polysaccharide mixtures containing pectin and carob bean meal are excluded and
where the fruit emulsion drink contains the polysaccharide mixture to the extent of between 3 and 9 g/l.

2. Fruit emulsion drink in accordance with patent claim 1, **characterised in that** the polysaccharide mixture contains citrus pectin having a degree of esterification greater than 30% and, preferably, greater than 60%.

3. Fruit emulsion drink in accordance with patent claim 1 and / or 2, **characterised in that** the polysaccharide mixture contains guar-kernel meal and xanthane.

4. Fruit emulsion drink in accordance with one or more of patent claims 1 to 3, **characterised in that** the polysaccharide mixture contains guar-kemel meal having a particle diameter of more than 0.06 mm and preferably between 0.075 and 0.085 with a ratio of the smallest to the largest particle diameter of 1 : 3. 4 and, preferably of between 1 : 1.2 and 1 : 1.4.

5. Fruit emulsion drink in accordance with one or more of patent claims 1 to 4, **characterised in that** the polysaccharide mixture contains carrageen, traganth, gum arabic, agar-agar, alginates and / or cellulose ether(s).

6. Fruit emulsion drink in accordance with one or more of patent claims 1 to 5, **characterised in that** the polysaccharide mixture contains pectin and that the ratio of pectin to the other polysaccharide or polysaccharides amounts to between 1 : 0.1 and 1 : 10 and, preferably, between 1 : 0.25 and 1 : 3.

7. Fruit emulsion drink in accordance with one or more of patent claims 1 to 6, **characterised in that** the ratio of guar-kernel meal to the other polysaccharide or polysaccharides amounts to between 1: 0.005 and 1 : 10 and , preferably, between 1 : 0.05 and 1 : 5.

8. Fruit emulsion drink in accordance with one or more of claims 1 to 7, **characterised in that** it has a viscosity > 5 mPas at 20 °C and, preferably, a viscosity of in the range between 8 and 500 mPas at 20°C.

9. Procedure for the manufacture of the fruit emulsion drink in accordance with one or more of patent claims 1 to 8, **characterised in that**, preferably, a pre-mixture is made from the polysaccharide mixture and water and, if required, a part or all of the sweetening agent, **in that** the remainder of the sweetening agents and the milk product is added to this pre-mixture with stirring, the resulting product is mixed with fruit juice and / or fruit pulp and flavouring, after removing air from this mixtures, if required, it is homogenised and, if desired, whole fruits and / or sections of fruit are then added and the end product is heat-treated to confer long-lasting properties.

## Revendications

1. Boisson émulsionnée aux fruits, ayant
une teneur en matières grasses inférieure ou égale à 150 g/l,
une teneur en alcool inférieure à 3 g/l,
un pH de 3 à 5,5,
et contenant
du jus de fruits et/ou de la pulpe de fruits et/ou des morceaux de fruits entiers ou broyés,
2 à 20 % en masse de produits laitiers et/ou de produits de remplacement des matières grasses par rapport à la masse totale de la boisson émulsionnée aux fruits,
un mélange de polysaccharides comprenant au moins deux polysaccharides,
de l'eau,
et éventuellement des additifs classiques,
**caractérisée en ce que** le mélange de polysaccharides contient de la farine de graines de guar, les mélanges de polysaccharides contenant de la pectine et de la farine de graines de caroube étant exclus, et
la boisson émulsionnée aux fruits contient le mélange de polysaccharides en une quantité de 3 à 9 g/l.

2. Boisson émulsionnée aux fruits selon la revendication 1, **caractérisée en ce que** le mélange de polysaccharides contient de la pectine de citrus avec un degré d'estérification supérieur à 30 %, de préférence supérieur à 60 %.

3. Boisson émulsionnée aux fruits selon la revendication 1 et/ou 2, **caractérisée en ce que** le mélange de polysaccharides contient de la farine de graines de guar et du xanthane.

4. Boisson émulsionnée aux fruits selon l'une ou plusieurs des revendications 1 à 3, **caractérisée en ce que** le mélange de polysaccharides contient de la farine de graines de guar ayant un diamètre de particules supérieur à 0,06 mm, de préférence de 0,0075 à 0,085 mm, et un rapport du diamètre de grains le plus petit au diamètre le plus grand allant jusqu'à 1:3,4, de préférence de 1:1,2 à 1:1,4.

5. Boisson émulsionnée aux fruits selon l'une ou plusieurs des revendications 1 à 4, **caractérisée en ce que** le mélange de polysaccharides contient de la carragénine, de la tragacanthe, de la gomme arabique, de l'agar-agar, des alginates et/ou des éthers de cellulose.

6. Boisson émulsionnée aux fruits selon l'une ou plusieurs des revendications 1 à 5, **caractérisée en ce que** le mélange de polysaccharides contient de la pectine, le rapport de la pectine à l'autre polysaccharide ou aux autres polysaccharides étant de 1:0,1 à 1:10, de préférence de 1:0,25 à 1:3.

7. Boisson émulsionnée aux fruits selon l'une ou plusieurs des revendications 1 à 6, **caractérisée en ce que** le rapport de la farine de graines de guar à l'autre polysaccharide ou aux autres polysaccharides est de 1:0,005 à 1:10, de préférence de 1:0,05 à 1:5.

8. Boisson émulsionnée aux fruits selon l'une ou plusieurs des revendications 1 à 7, **caractérisée en ce qu'**elle a une viscosité supérieure à 5 mPas à 20°C, de préférence une viscosité comprise entre 8 et 500 mPas à 20°C.

9. Procédé de préparation de la boisson émulsionnée aux fruits selon l'une ou plusieurs des revendications 1 à 8, **caractérisé en ce que** l'on prépare de préférence un mélange préalable à partir du mélange de polysaccharides et d'eau et éventuellement d'une partie ou de la totalité de l'édulcorant, on ajoute à ce mélange préalable, en agitant, la quantité restante des édulcorants et le produit laitier, on ajoute au mélange obtenu du jus de fruits et/ou de la pulpe de fruits et des arômes, on élimine éventuellement l'air de ce mélange, on l'homogénéise, puis on ajoute éventuellement des fruits entiers et/ou des morceaux de fruits, et on stabilise le produit ainsi obtenu en le chauffant.
